# EUROPEAN PATENT SPECIFICATION

(11) **EP 0 342 793 B1**
(45) Date of publication and mention of the grant of the patent: **30.03.1994**
(21) Application number: 89303766.3
(22) Date of filing: 17.04.1989
(51) Int. Cl.: C08F 2/24

(54) **Alkaline polymerization of carboxylated polymers**
Alkalin-Polymerisation von karboxylierten Polymeren
Polymérisation alcaline de polymères carboxylés

(30) Priority: 19.04.1988 US 183048
(43) Date of publication of application: 23.11.1989
(73) Proprietor: BASF Aktiengesellschaft, 67063 Ludwigshafen (DE); POLYSAR FINANCIAL SERVICES S.A., Fribourg Canton of Fribourg (CH)
(72) Inventor: Blanpain, Peter Ronald Jeffrey, NL-6661 BS Elst (NL); Leenders, Hendrikus Wilhelmus, NL-6813 JP Arnhem (NL)
(74) Representative: Jukes, Herbert Lewis

(56) References cited:
- BE-A- 694 213
- BE-A- 766 365
- FR-A- 2 180 748
- US-A- 3 458 466
- US-A- 4 065 423

## Description

The present invention relates to a process for the preparation of carboxylated polymers at alkaline pH.

Carboxylated emulsion polymers such as Sinclair-Koppers K-55E latex have been known since the early 1950's. Such latices had enhanced chemical and mechanical stability. Additionally, such polymers provide improved binding power as they are self crosslinking.

While the polymers per se are extremely useful, they have had to be prepared under acidic conditions. This necessitated using glass lined or stainless steel reactors.

Since the early 1970's polymer chemists and process engineers have been seeking ways to produce carboxylated polymers at alkaline pH's.

One of the early attempts in this area is disclosed in Hoechst's BE-A-766,365 published April 27, 1971. This patent discloses polymerizing a styrene butadiene monomer mixture to 75-97% conversion at alkaline pH then adding a mixture of unsaturated acid and styrene and continuing the polymerization to complete conversion. Various other attempts have been made to sequence the polymerization so that the acid is incorporated over a relatively short period of time. Most of these procedures have not met with extensive commercial application. One of the problems is that it is still necessary to carry out at least a portion of the polymerization at acid pH's.

US-A-4,065,423 issued December 27, 1977 in the name of Uniroyal Inc. discloses polymers containing acryloyloxy carboxylic acid monomers. This patent also teaches that the emulsion polymerization must be carried out at a pH from 1.5 to 7.0 preferably from 3 to about 5 (col. 4, lines 34-35).

Applicant discovered that acryloyloxy carboxylic acid type monomers may be polymerized at pH's in excess of 7.5, preferably in the range of 8-11. The polymerisation need not be conducted in glass lined or stainless steel reactors.

The present invention provides in a process for the emulsion polymerization of a monomer mixture selected from :
(A) monomer mixtures comprising:
   (i) from 20 to 80 weight percent of a mixture comprising 100 to 75 weight percent of one or more C₈₋₁₂ vinyl aromatic monomers which are unsubstituted or substituted by a C₁₋₄ alkyl radical or a chlorine atom and 0 to 25 weight percent of one or more C₂₋₈ alkenyl nitriles;
   (ii) from 79.5 to 19.5 weight percent of one or more C₄₋₆ conjugated diolefins which are unsubstituted or substituted by a chlorine atom;
   (iii) from 0.5 to 10 weight percent of one or more monomers of the formula: 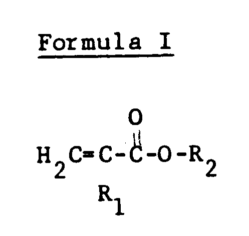 wherein R₁ is hydrogen or a C₁₋₆ alkyl radical and R₂ a radical of the formula
      (a) 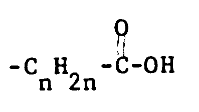 wherein n is an integer from 1 to 6; or
      (b)

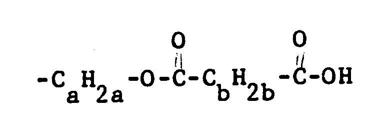

         wherein a and b are integers from 1 to 4; and
   (iv) optionally up to 20 weight percent of one or more monomers selected from :
      (a) C₁₋₈ alkyl and hydroxyalkyl esters of C₃₋₆ ethylenically unsaturated carboxylic acids;
      (b) C₃₋₆ ethylenically unsaturated aldehydes; and
      (c) amides of C₃₋₆ ethylenically unsaturated carboxylic acids which amides are unsubstituted or substituted at the nitrogen atom by up to two radicals selected from :
         C₁₋₄ alkyl and C₁₋₄ hydroxyalkyl radicals;
(B) monomer mixtures comprising:
   (i) at least 75 weight percent of a monomer mixture comprising 100 to 80 weight percent of one or more monomers selected from :
      C₁₋₈ alkyl or hydroxyalkyl esters of C₃₋₆ ethylenically unsaturated carboxylic acids; and up to 20 weight percent of one or more monomers selected from :
      C₈₋₁₂ vinyl aromatic monomers which are unsubstituted or substituted by a C₁₋₄ alkyl radical or a chlorine atom and C₂₋₈ alkenyl nitriles;
   (ii) from 0.5 to 25 weight percent of one or more monomers of Formula I as defined above;
   (iii) optionally up to 20 weight percent of one or more monomers selected from :
      (a) C₃₋₆ ethylenically unsaturated aldehydes; and
      (b) amides of C₃₋₆ ethylenically unsaturated carboxylic acids which amides are unsubstituted or substituted at the nitrogen atom by up to two radicals selected from:
         C₁₋₄ alkyl and C₁₋₄ hydroxyalkyl radicals;
(C) monomer mixtures comprising:
   (i) from 5 to 39.5 weight percent of one or more C₂₋₃ olefins;
   (ii) from 94.5 to 60 weight percent of a mixture comprising:
      100 to 80 weight percent of one or more monomers selected from : C₁₋₈ alkyl or hydroxyalkyl esters of C₃₋₆ ethylenically unsaturated carboxylic acid;
      and up to 20 weight percent of a C₈₋₁₂ vinyl aromatic monomer which is unsubstituted or substituted by a C₁₋₄ alkyl radical or a chlorine atom;
   (iii) from 0.5 to 10 weight percent of a monomer of Formula I as defined above; and
   (iv) optionally up to 20 weight percent of one or more monomers selected from:
      (a) C₃₋₆ ethylenically unsaturated aldehydes; and
      (b) amides of C₃₋₆ ethylenically unsaturated carboxylic acids which amides are unsubstituted or substituted at the nitrogen atom by up to two radicals selected from :
         C₁₋₄ alkyl and C₁₋₄ hydroxyalkyl radicals;
(D) monomer mixtures comprising:
   (i) from 5 to 39.5 weight percent of a mixture comprising 100 to 75 weight percent of one or more C₂₋₈ alkenyl nitriles, and 0 to 25 weight percent of one or more C₈₋₁₂ vinyl aromatic monomers which is unsubstituted or substituted by a C₁₋₄ alkyl radical, or a chlorine atom;
   (ii) from 94.5 to 60 weight percent of one or more C₄₋₆ conjugated diolefins which are unsubstituted or substituted by a chlorine atom;
   (iii) from 0.5 to 10 weight percent of a monomer of Formula I as defined above; and
   (iv) optionally up to 20 weight percent of one or more monomers selected
      **from:**
      (a) C₁₋₈ alkyl and hydroxyalkyl esters of C₃₋₆ ethylenically unsaturated carboxylic acids;
      (b) C₃₋₆ ethylenically unsaturated aldehydes; and
      (c) amides of C₃₋₆ ethylenically unsaturated carboxylic acids which amides are unsubstituted or substituted at the nitrogen atom by up to two radicals selected from :
         C₁₋₄ alkyl and C₁₋₄ hydroxyalkyl radicals;
(E) monomer mixtures comprising:
   (i) from 99.5 to 70 weight percent of a monomer mixture comprising:
      (a) from 100 to 80 weight percent of one or more halogenated C₂₋₆ aliphatic alkenyl monomers and
      (b) up to 20 weight percent of one or more monomers selected from :
         C₁₋₈ alkyl and hydroxy alkyl esters of C₃₋₆ ethylenically unsaturated carboxylic acids;
   (ii) from 0.5 to 29.5 weight of one or more monomers of Formula I as defined above; and
   (iii) optionally up to 20 weight percent of one or more monomers selected from :
      (a) C₃₋₆ ethylenically unsaturated aldehydes; and
      (b) amides of C₃₋₆ ethylenically unsaturated carboxylic acids which amides are unsubstituted or substituted at the nitrogen atom by up to two radicals selected from :
         C₁₋₄ alkyl and C₁₋₄ hydroxyalkyl radicals;
characterized in that the polymerization takes place at a pH of greater than 7.5.

The present invention also provides the above polymers.

The polymers which may be polymerized in accordance with the present invention may be characterized as carboxylated styrene butadiene type polymers, carboxylated acrylate type polymers, carboxylated nitrile type polymers and carboxylated vinyl(idene) chloride type polymers.

Generally, carboxylated styrene-butadiene type polymers comprise:
from 20 to 80, preferably from 40 to 70 weight percent of a mixture comprising 100 to 75, preferably 100 to 80 weight percent of one or more C₈₋₁₂ vinyl aromatic monomers which are unsubstituted or substituted by a C₁₋₄ alkyl radical or a chlorine atom, and from 0 to 25, preferably less than 20 weight percent of a C₂₋₈ alkenyl nitrile;
from 79.5 to 19.5, preferably from 60 to 29.5 weight percent of one or more C₄₋₆ conjugated diolefins which are unsubstituted or substituted by a chlorine atom; and
from 0.5 to 10, preferably from 0.5 to 5, weight percent of one or more monomers of the Formula I 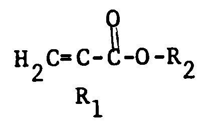
wherein R₁ is hydrogen or a C₁₋₆ alkyl radical and R₂ a radical of the formula
(a) 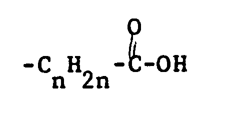 wherein n is an integer from 1 to 6; or
(b) 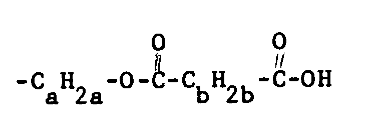 wherein a and b are integers from 1 to 4;
Optionally, the polymer may also contain up to about 20, preferably less than 10, most preferably from 0.5 to 5 weight percent of one or more functional monomers selected from:
(a) C₁₋₈ alkyl and hydroxyalkyl esters of C₃₋₆ ethylenically unsaturated carboxylic acids;
(b) C₃₋₆ ethylenically unsaturated aldehydes; and
(c) amides of C₃₋₆ ethylenically unsaturated carboxylic acids, which amides are unsubstituted or substituted at the nitrogen atom by up to two radicals selected from :
   C₁₋₄ alkyl and C₁₋₄ hydroxyalkyl radicals.

C₈₋₁₂ vinyl aromatic monomers may be styrene and alpha methyl styrene. C₄₋₆ conjugated diolefins may be butadiene, isoprene, and chloroprene. The compounds of Formula I are acryloyloxy carboxylic acids. These compounds may be alpha-acryloyloxy acetic acid (e.g. beta carboxy ethyl acrylate), beta-acryloyloxy propionic acid; beta-methylacryloyloxy propionic acid; alpha-methacryloyloxy acetic acid, gamma-acryloyloxy butanoic acid and gamma-methacryloyloxy butanoic acid and the higher propyloyloxy- and butyloyloxy-homologues of these compounds.

Some functional monomers are acrolein, methyl acrylate, ethyl acrylate, butyl acrylate, methyl methacrylate; ethyl methacrylate, butyl methacrylate, hydroxyethyl acrylate, ethylhexyl acrylate, hydroxyethyl methacrylate, ethylhexyl methacrylate; acrylamide, methacrylamide, N-methylol acrylamide, and N-methylol-methacrylamide.

The carboxylated acrylate type polymers which may be prepared in accordance with the present invention comprise:
at least 75, preferably at least 85 weight percent of a mixture comprising:
100 to 80 weight percent of one or more monomers selected from : C₁₋₈ alkyl or hydroxyalkyl esters of C₃₋₆ ethylenically unsaturated carboxylic acids and up to 20, preferably less than 15 weight percent of one or more monomers selected from:
C₈₋₁₂ vinyl aromatic monomers which are unsubstituted or substituted by a C₁₋₄ alkyl radical or a chlorine atom, and C₂₋₈ alkenyl nitriles;
up to 25, preferably less than 15 weight percent of a monomer of Formula I as described above; and
optionally up to 20, preferably from 0.5 to 10, most preferably from 0.5 to 5 weight percent of one or more of the functional monomers discussed above other than the C₁₋₈ alkyl or hydroxyalkyl esters of C₃₋₆ ethylenically unsaturated carboxylic acids.

Some C₁₋₈ alkyl and hydroxy alkyl esters of C₃₋₆ ethylenically unsaturated carboxylic acids are methyl acrylate, ethyl acrylate, butyl acrylate, methyl methacrylate; ethyl methacrylate, butyl methacrylate, hydroxyethyl acrylate, ethylhexyl acrylate, hydroxyethyl methacrylate, ethylhexyl methacrylate.

Vinyl aromatic monomers have been discussed above.

The ethylene acrylate type polymers comprise:
(i) 5 to 40, preferably 10 to 35 weight percent of a C₂₋₃ olefin;
(ii) from 94.5 to 59.5, preferably from 80 to 64.5 weight percent of a monomer mixture comprising 100 to 80 weight percent of one or more monomers selected from :
   C₁₋₈ alkyl or hydroxy alkyl esters of C₃₋₆ ethylenically unsaturated carboxylic acids; and up to 20 weight percent of one or more monomers selected from :
   C₈₋₁₂ vinyl aromatic monomers which are unsubstituted or substituted by a C₁₋₄ alkyl radical or a chlorine atom;
(iii) from 0.5 to 10, preferably from 0.5 to 5 weight percent of one or more monomers of Formula I as defined above; and
(iv) optionally up to 20, preferably from 0.5 to 10, most preferably from 0.5 to 5 weight percent of one or more of the functional monomers discussed above other than the C₁₋₈ alkyl and hydroxyalkyl esters of C₃₋₆ ethylenically unsaturated carboxylic acids.

Some C₂₋₃ olefins are ethylene and propylene. C₁₋₈ alkyl and hydroxy alkyl esters of C₃₋₆ ethylenically unsaturated carboxylic acids have been discussed above. C₈₋₁₂ vinyl aromatic monomers have been discussed above.

The carboxylated nitrile type polymers comprise:
(i) from 5 to 39.5, preferably from 20 to 40 weight percent of a mixture comprising 100 to 75, preferably 100 to 80 weight percent of one or more C₂₋₈ alkenyl nitriles and from 0 to 25, preferably less than 20 weight percent of a C₈₋₁₂ vinyl aromatic monomer which is unsubstituted or substituted by a C₁₋₄ alkyl radical or a chlorine atom;
(ii) from 94.5 to 60, preferably from 79.5 to 59.5 weight percent of one or more C₄₋₆ conjugated diolefins which are unsubstituted or substituted by a chlorine atom;
(iii) from 0.5 to 10, preferably from 0.5 to 5 weight percent of one or more monomers of Formula I as discussed above; and
(iv) up to 20, preferably from 0.5 to 10, most preferably from 0.5 to 5 weight per cent of one or more of the functional monomers as discussed above.

Apart from the alkenyl nitrile monomers, some monomers have been discussed above. Nitrile monomers may be acrylonitrile and methacrylonitrile.

The carboxylated vinyl(idene) type polymers comprise:
(i) from 99.5 to 70, preferably from 99.5 to 80 weight percent of a monomer mixture comprising:
   (a) from 100 to 80 weight percent of one or more halogenated C₂₋₆ aliphatic alkenyl monomers, and
   (b) up to 20 weight percent of one or more monomers selected from :
      C₁₋₈ alkyl and hydroxyalkyl esters of C₃₋₆ ethylenically unsaturated carboxylic acids;
(ii) from 0.5 to 29.5, preferably from 0.5 to 19.5, most preferably from 0.5 to 10, particularly from 0.5 to 5, weight percent of one or more monomers of Formula I as defined above; and
(iii) optionally up to 20, preferably from 0.5 to 10, most preferably from 0.5 to 5 weight percent of one or more functional monomers described above.

The monomers of Formula I, the alkyl and hydroxyalkyl esters, and the functional monomers have been discussed above. Some halogenated C₂₋₆ aliphatic alkenyl monomers are vinyl and vinylidene chloride.

Emulsion polymerization is conducted in an aqueous media. Generally, the monomers are dispersed in water with a surfactant. The surfactant is usually anionic or non-ionic if the functional species in the polymer contain a negative charge such as carboxylic acid groups. The surfactant may be synthetic such as a sulfate or sulfonate surfactant. These surfactants tend to have long chain alkyl, alkenyl or aryl alkyl back bones. The emulsifier may be a mixed type such as a fatty acid derivative of a sulfosuccinate. The surfactant may be a fatty acid such as a sodium or potassium stearate, or palmate (palmitate). Generally, such fatty acid surfactants become less effective at pH's below about 8.5. The emulsifier may be a non-ionic emulsifier. Generally, these emulsifiers comprise a polyalkylene oxide, usually polyethylene or polypropylene oxides. The surfactant may further contain an alkyl radical or an ester radical such as a sorbitan monostearate, or a fatty acid radical such as a stearate. Different types of surfactant as previously discussed may be employed alone or in combinations. Some emulsifiers are listed in a number of texts including McCutcheon's Detergents & Emulsifiers published annually (North American & European editions) by the McCutcheon Division, Mc Publishing Co., Glen Rock N.J.

The polymerization may be a batch process in which the entire dispersion of monomers in water is put in a reactor; it may be an incremental process in which a portion of the monomer mixture, soap and water is added to the reactor and the polymerization is initiated; or it may be continuous using a chain of two or more reactors. The remaining monomers and soap solutions, if any, may be added to the reactor over a period of time. This may permit the formation of domains within the polymer. The process may be a seeded process in which a small amount usually less than 5% of a seed polymer is added to the reactor prior to initiation. In some cases the seed may be formed insitu.

The reaction is initiated by a free radical. The free radical may be generated by the thermal decomposition of a water soluble compound such as a persulfate, or an oil soluble compound such as azobisisobutyronitrile (AIBN). Generally, such polymerizations are hot and are conducted at temperatures from 40 to 95°C.

The polymerization may also be carried out as a cold process at temperatures less than about 40°C but greater than the freezing temperatures of the emulsion.

Cold polymerizations may be conducted at temperatures from about -5 to 35°C, preferably from about 5 to 25°C. The lower temperature systems may require the presence of an agent to lower the freezing point of the monomer emulsion, such as methanol.

The reaction may be initiated at low temperatures by using a redox pair to generate free radicals such as a peroxide and a reducing agent.

The emulsion may also contain small amounts usually less than 1, most preferably less than 0.5 weight percent of an electrolyte. This helps control particle size and helps maintain a charge balance within the emulsion. The emulsion may also contain a sequestering agent, particularly if hard water is used to form the emulsion. Usually it is desirable to modify the molecular weight distribution of the polymer produced. This may be achieved through the use of a modifier or chain transfer agents such as straight or branch chained C₈₋₁₆ alkyl mercaptans, carbon tetrachloride, or similar products; alone or in combination as is well known in the art.

The polymerization may take from 5 to 16 hours depending on the process used and the reaction conditions.

There are many texts which discuss emulsion polymerization including:
Emulsion Polymerization Theory and practice, D. C. Blackly, John Wiley and Sons, N.Y.; Principles of Polymer Chemistry, Paul J. Flory, Cornell University Press; and Emulsion Polymerization, Irja Piirma, Academic Press.

In accordance with the present invention the pH of the emulsion may be greater than about 7.5, preferably from 8 to 11, most preferably from 8.5 to 10. The pH of the emulsion may be adjusted with common organic and inorganic bases. In- or organic bases may be ammonia, ammonium salts such as ammonium hydroxide, and lower (C₁₋₆) alkyl and hydroxyalkyl amines such as ethanol amine. Some inorganic bases are alkali and alkaline earth salts such as sodium, and potassium hydroxide.

After polymerization the resulting latex may be concentrated and various post additives such as biocides, and additional surfactants, are usually added to the latex. The latex pH is adjusted to an appropriate value.

The following examples are intended to illustrate the invention and are not intended to limit it. In the examples parts are parts by weight unless otherwise specified.

### Example 1

An emulsion was prepared comprising:

| | |
|---|---|
| Styrene | 62.0 |
| Butadiene | 38.0 |
| Tertiary dodecyl mercaptan | 0.3 |
| Sequestering agent | 0.021 |
| Dodecyl benzene sodium sulfonate | 0.7 |
| Alpha acryloyloxy acetic acid (Beta carboxyethyl acrylate) | 2.0 |
| Electrolyte | 0.2 |
| Styrene butadiene seed polymer | 10.0 |
| Potassium persulfate | 0.6 |
| Water | 92.0 |

The initial and increment aqueous charges were adjusted to pH 10.5 with KOH. The initial aqueous charge containing the seed was charged to the reactor, purged with nitrogen, and heated to 85°C. Initial persulfate was charged and the monomer mixture and aqueous phase (containing the functional monomers) injections commenced and were added over a period of 6 hours. After completing the increment injections, the reactor contents were maintained at 85° C for a further 2 hours. The latex was then steam stripped. The resulting latex was stable to mechanical shear and Ca(OH)₂. The latex had a charge density of 0.071 meg COOH per gram of polymer dry.

### Example 2

An emulsion was prepared, employing a standard batch polymerisation technique, comprising:

| | |
|---|---|
| Styrene | 58.0 |
| Butadiene | 40.0 |
| Tertiary dodecyl mercaptan | 0.3 |
| Water | 100.0 |
| Sodium dialkyl sulfosuccinates (Empimin MA) | 2.0 |
| TSPP | 0.25 |
| Alpha acryloyloxy acetic acid (Beta carboxyethyl acrylate | 2.0 |
| Potassium persulfate | 0.4 |

The aqueous mixture containing functional monomer was adjusted to pH 10.5 with NaOH, charged to the reactor and purged with nitrogen. The styrene, tertiary dodecyl mercaptan and butadiene were charged with the reactor contents heated to 57°C at which time the initiator was introduced. The reactor contents were maintained at 57°C under agitation for a period of 12-14 hours. The resulting latex was stable to mechanical shear and Ca(OH)₂. The polymer had a surface charge of 0.064 meg COOH/gram dry.

In the present application, any numerical value includes the precise value and any value "about" or "substantially" the same as the precise value.

It will be appreciated that polymers containing acryloyloxy monomers may be prepared by emulsion polymerization at alkaline pH. This permits the use of unlined mild steel reactors to polymerize functional containing monomers.

## Claims

1. In a process for the emulsion polymerisation of a monomer mixture selected from :
(A) monomer mixtures comprising:
(i) from 20 to 80 weight percent of a mixture comprising 100 to 75 weight per cent of one or more C₈₋₁₂ vinyl aromatic monomers which are unsubstituted or substituted by a C₁₋₄ alkyl radical or a chlorine atom, and 0 to 25 weight percent of one or more C₂₋₈ alkenyl nitriles;
(ii) from 79.5 to 19.5 weight percent of one or more C₄₋₆ conjugated diolefins which are unsubstituted or substituted by a chlorine atom;
(iii) from 0.5 to 10 weight percent of one or more monomers of the formula: 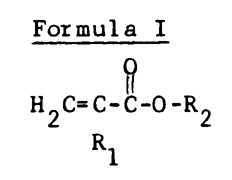 wherein R₁ is hydrogen or a C₁₋₆ alkyl radical and R₂ a radical of the formula
(a) 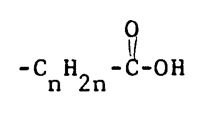 wherein n is an integer from 1 to 6; or
(b) 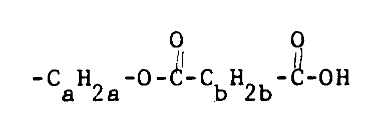 wherein a and b are integers from 1 to 4; and
(iv) optionally up to 20 weight percent of one or more monomers selected from :
(a) C₁₋₈ alkyl and hydroxyalkyl esters of C₃₋₆ ethylenically unsaturated carboxylic acids;
(b) C₃₋₆ ethylenically unsaturated aldehydes; and
(c) amides of C₃₋₆ ethylenically unsaturated carboxylic acids which amides are unsubstituted or substituted at the nitrogen atom by up to two radicals selected from :
C₁₋₄ alkyl and C₁₋₄ hydroxyalkyl radicals;
(B) monomers mixtures comprising:
(i) at least 75 weight percent of a monomer mixture comprising 100 to 80 weight percent of one or more monomers selected from :
C₁₋₈ alkyl or hydroxyalkyl esters of C₃₋₆ ethylenically unsaturated carboxylic acids and monomers selected from :
C₈₋₁₂ vinyl aromatic monomers which are unsubstituted or substituted by a C₁₋₄ alkyl radical or a chlorine atom, and C₂₋₈ -alkenyl nitriles;
(ii) from 0.5 to 25 weight percent of a monomer of Formula I as defined above;
(iii) optionally up to 20 weight percent of one or more monomers selected from :
(a) C₃₋₆ ethylenically unsaturated aldehydes; and
(b) amides of C₃₋₆ ethylenically unsaturated carboxylic acids which amides are unsubstituted or substituted at the nitrogen atom by up to two radicals selected from :
C₁₋₄ alkyl and C₁₋₄ hydroxyalkyl radicals;
(C) monomer mixtures comprising:
(i) from 5 to 39.5 weight percent of one or more C₂₋₃ olefins;
(ii) from 94.5 to 60 weight percent of a monomer mixture comprising:
100 to 80 weight percent of one or more monomers selected from : C₁₋₈ alkyl or hydroxyalkyl esters of C₃₋₆ ethylenically unsaturated carboxylic acid; and
up to 20 weight percent of a C₈₋₁₂ vinyl aromatic monomer which is unsubstituted or substituted by a C₁₋₄ alkyl radical or a chlorine atom;
(iii) from 0.5 to 10 weight percent of a monomer of Formula I as defined above; and
(iv) optionally up to 20 weight percent of one or more monomers selected from :
(a) C₃₋₆ ethylenically unsaturated aldehydes; and
(b) amides of C₃₋₆ ethylenically unsaturated carboxylic acids which amides are unsubstituted or substituted at the nitrogen atom by up to two radicals selected from :
C₁₋₄ alkyl and C₁₋₄ hydroxyalkyl radicals;
(D) monomer mixtures comprising:
(i) from 5 to 39.5 weight percent of a mixture comprising 100 to 75 weight percent of one or more C₂₋₈ alkenyl nitriles and 0 to 25 weight percent of one or more vinyl aromatic monomers which are unsubstituted or substituted by a C₁₋₄ alkyl radical or a chlorine atom;
(ii) from 94.5 to 60 weight percent of one or more C₄₋₆ conjugated diolefins which are unsubstituted or substituted by a chlorine atom;
(iii) from 0.5 to 10 weight percent of a monomer of Formula I as defined above; and
(iv) optionally up to 20 weight percent of one or more monomers selected from :
(a) C₁₋₈ alkyl and hydroxy alkyl esters of C₃₋₆ ethylenically unsaturated carboxylic acids;
(b) C₃₋₆ ethylenically unsaturated aldehydes; and
(c) amides of C₃₋₆ ethylenically unsaturated carboxylic acids which amides are unsubstituted or substituted at the nitrogen atom by up to two radicals selected from :
C₁₋₄ alkyl and C₁₋₄ hydroxyalkyl radicals;
(E) monomer mixtures comprising:
(i) from 99.5 to 70 weight percent of a monomer mixture comprising:
(a) from 100 to 80 weight percent of one or more halogenated C₂₋₆ aliphatic alkenyl monomers and
(b) up to 20 weight percent of one or more monomers selected from :
C₁₋₈ alkenyl and hydroxy alkyl esters of C₃₋₆ ethylenically unsaturated carboxylic acids;
(ii) from 0.5 to 29.5 weight of one or more monomers of Formula I as defined above; and
(iii) optionally up to 20 weight percent of one or more monomers selected from :
(a) C₃₋₆ ethylenically unsaturated aldehydes; and
(b) amides of C₃₋₆ ethylenically unsaturated carboxylic acids which amides are unsubstituted or substituted at the nitrogen atom by up to two radicals selected from :
C₁₋₄ alkyl and C₁₋₄ hydroxyalkyl radicals;
characterized in that the polymerization takes place at a pH of greater than 7.5.

2. A process according to Claim 1 wherein the pH is from 8 to 11.

3. A process according to Claim 1 characterized in that the monomer mixture comprises:
from 40 to 70 weight percent of one or more monomers selected from : styrene, alpha methyl styrene and acrylonitrile;
from 29.5 to 60 weight percent of one or more monomers selected from : butadiene, isoprene, and chloroprene;
from 0.5 to 5 weight percent of one or more monomers selected from :
alpha-acryloyloxy acetic acid; beta acryloyloxy propionic acid; beta-methacryloyloxy propionic acid;
alpha-methacryloyloxy acetic acid; gamma-acryloyloxy butanoic acid; gamma-methacryloyloxy butanoic acid; and
up to 5 weight percent of one or more monomers selected from : acrolein, methylacrylate, ethyl acrylate, butyl acrylate, methyl-methacrylate; ethyl methacrylate, butyl methacrylate, hydroxylethyl acrylate, ethyl-hexylacrylate, hydroxyethyl methacrylate, ethylhexyl methacrylate, acrylamide, methacrylamide, N-methylol acrylamide, and N-methylol-methacrylamide.

4. A process according to Claim 2 wherein said monomer mixture comprises at least 85 weight percent of a mixture consisting of 100 to 80 weight percent of one or more monomers selected from : methyl acrylate, ethyl acrylate, hydroxyethyl methacrylate, butyl methacrylate, hydroxybutyl methacrylate, and ethyl hexyl methacrylate and up to 20 weight percent of one or more monomers selected from: styrene alpha methylstyrene, and acrylonitrile;
from 0.5 to 5 weight percent of one or more monomers selected from :
alpha-acryloyloxy acetic acid; beta-acryloyloxy propionic acid; beta-methacryloyloxy propionic acid; alpha-methacryloyloxy acetic acid; gamma-acryloyloxy butanoic acid; gamma-methacryloyloxy butanoic acid; and
up to 5 weight percent of one or more monomers selected from : acrolein, acrylamide, methacrylamide, N-methylol acrylamide, and N-methylol-methacrylamide.

5. A process according to Claim 2 wherein said monomer mixture comprises:
from 5 to 40 weight percent of ethylene or propylene;
from 94.5 to 59.5 weight percent of a mixture consisting of from 100 to 80 weight percent of one or more monomers selected from : methyl acrylate, ethyl acrylate, hydroxyethyl acrylate, butyl acrylate, hydroxybutyl acrylate, ethylhexyl acrylate methyl methacrylate, ethyl methacrylate, hydroxyethyl methacrylate, butyl methacrylate, hydroxybutyl methacrylate; and up to 20 weight percent of one or more monomers selected from : styrene, alpha methylstyrene and acrylonitrile;
from 0.5 to 5 weight percent of one or more monomers selected from :
alpha-acryloyloxy acetic acid; beta acryloyloxy propionic acid; beta-methacryloyloxy propionic acid;
alpha-methacryloyloxy acetic acid; gamma-acryloyloxy butanoic acid; gamma-methacryloyloxy butanoic acid; and
up to 5 weight percent of one or more monomers selected from : acrolein, acrylamide, methacrylamide, N-methylol acrylamide, and N-methylol-methacrylamide.

6. A process according to Claim 2 wherein said monomer mixture comprises:
from 20 to 40 weight percent of one or more monomers selected from :
acrylonitrile or methacrylonitrile;
from 79.5 to 59.5 weight percent of one or more monomers selected from : butadiene, isoprene, and chloroprene;
from 0.5 to 5 weight percent of one or more monomers selected from :
alpha-acryloyloxy acetic acid; beta-acryloyloxy propionic acid; beta-methacryloyloxy propionic acid;
alpha-methacryloyloxy acetic acid; gamma-acryloyloxy butanoic acid; gamma-methacryloyloxy butanoic acid; and
up to 5 weight percent of one or more monomers selected from: acrolein, methylacrylate, ethyl acrylate, butyl acrylate, methyl-methacrylate; ethyl methacrylate, butyl methacrylate, hydroxylethyl acrylate, ethyl-hexylacrylate, hydroxyethyl methacrylate, ethylhexyl methacrylate, acrylamide, methacrylamide, N-methylol acrylamide, and N-methylol-methacrylamide.

7. A process according to Claim 2 wherein said monomer mixture comprises:
(i) from 99.5 to 80 weight percent of a monomer mixture comprising:
100 to 80 weight percent of vinyl or vinylidene chloride; and
up to 20 weight percent of one or more monomers selected from : methyl acrylate, methyl methacrylate, ethyl acrylate, ethyl methacrylate and butyl acrylate;
(ii) from 0.5 to 19.5 weight percent of one or more monomers selected from :
alpha-acryloyloxy acetic acid; beta acrtyloyloxy propionic acid, beta methacryloyloxy propionic acid; alpha-methacryloyloxy acetic acid; gamma-acryloyloxy butanoic acid; and gamma-methacryloyloxy butanoic acid; and
(iii) up to 5 weight percent of one or more monomers selected from :
acrolein, acrylamide, N-methylol acrylamide and N-methylol methacrylamide.

8. A polymer obtained according to claim 1 selected from :
(A) polymer prepared by polymerizing a monomer mixture comprising:
(i) from 5 to 40 weight percent of one or more C₂₋₃ olefins;
(ii) from 94.5 to 59.5 weight percent of a monomer mixture comprising:
100 to 80 weight percent of one or more monomers selected from : C₁₋₈ alkyl or hydroxyalkyl esters of C₃₋₆ ethylenically unsaturated carboxylic acid; and up to 20 weight percent of a C₈₋₁₂ vinyl aromatic monomer which is unsubstituted or substituted by a C₁₋₄ alkyl radical or a chlorine atom;
(iii) from 0.5 to 10 weight percent of a monomer of Formula I as defined in Claim 1; and
(iv) optionally up to 20 weight percent of one or more monomers selected from :
(a) C₃₋₆ ethylenically unsaturated aldehydes; and
(b) amides of C₃₋₆ ethylenically unsaturated carboxylic acids which amides are unsubstituted or substituted at the nitrogen atom by up to two radicals selected from :
C₁₋₄ alkyl and C₁₋₄ hydroxyalkyl radicals;
(B) polymer prepared by polymerizing a monomer mixture comprising:
(i) from 5 to 40 weight percent of one or more C₂₋₈ alkenyl nitriles;
(ii) from 94.5 to 59.5 weight percent of one or more C₄₋₆ conjugated diolefins;
(iii) from 0.5 to 10 weight percent of a monomer of Formula I as defined in Claim 1; and
(iv) optionally up to 20 weight percent of one or more monomers selected
from:
(a) C₁₋₈ alkyl esters of C₃₋₆ ethylenically unsaturated carboxylic acids;
(b) C₃₋₆ ethylenically unsaturated aldehydes; and
(c) amides of C₃₋₆ ethylenically unsaturated carboxylic acids which amides are unsubstituted or substituted at the nitrogen atom by up to two radicals selected from :
C₁₋₄ alkyl and C₁₋₄ hydroxyalkyl radicals;
(C) polymers prepared by polymerizing a monomer mixture comprising:
(i) from 99.5 to 70 weight percent of a monomer mixture comprising:
(a) from 100 to 80 weight percent of one or more halogenated C₂₋₆ aliphatic alkenyl monomers and
(b) up to 20 weight percent of one or more monomers selected from :
C₁₋₈ alkenyl and hydroxy alkyl esters of C₃₋₆ ethylenically unsaturated carboxylic acids;
(ii) from 0.5 to 29.5 weight of one or more monomers of Formula I as defined in Claim 1; and
(iii) optionally from up to 20 weight percent of one or more monomers selected from :
(a) C₃₋₆ ethylenically unsaturated aldehydes; and
(b) amides of C₃₋₆ ethylenically unsaturated carboxylic acids which amides are unsubstituted or substituted at the nitrogen atom by up to two radicals selected from :
C₁₋₄ alkyl and C₁₋₄ hydroxyalkyl radicals;

9. A polymer according to Claim 8 comprising:
from 5 to 40 weight percent of ethylene or propylene;
from 94.5 to 59.5 weight percent of a mixture consisting of from 100 to 80 weight percent of one or more monomers selected from : methyl acrylate, ethyl acrylate, hydroxyethyl acrylate, butyl acrylate hydroxybutyl acrylate, ethylhexyl acrylate, methyl methacrylate, ethyl methacrylate, hydroxyethyl methacrylate, butyl methacrylate, hydroxybutyl methacrylate; and up to 20 weight percent of one or more monomers selected from : styrene and alpha methylstyrene;
from 0.5 to 5 weight percent of alpha acryloyloxy acetic acid; beta acryloyloxy propionic acid; beta methacryloyloxy propionic acid; alpha methacryloyloxy acetic acid; gamma acryloyloxy butanoic acid; gamma methacryloyloxy butanoic acid; and
up to 5 weight percent of one or more monomers selected from : acrolein, acrylamide, methacrylamide, N-methylol acrylamide, and N-methylol-methacrylamide.

10. A polymer according to Claim 8 comprising:
from 20 to 40 weight percent of one or more monomers selected from :
acrylonitrile or methacrylonitrile;
from 79.5 to 59.5 weight percent of one or more monomers selected from : butadiene, isoprene, and chloroprene;
from 0.5 to 5 weight per cent of alpha acryloyloxy acetic acid; beta acryloyloxy propionic acid; beta methacryloyloxy propionic acid; alpha methacryloyloxy acetic acid; gamma acryloyloxy butanoic acid; gamma methacryloyloxy butanoic acid and up to 5 weight percent of one or more monomers selected from :
acrolein, methylacrylate, ethyl acrylate, butyl acrylate, methyl-methacrylate; ethyl methacrylate, butyl methacrylate, hydroxylethyl acrylate, ethyl-hexylacrylate, hydroxyethyl methacrylate, ethylhexyl methacrylate, acrylamide, methacrylamide, N-methylol acrylamide, and N-methylol-methacrylamide.

11. A polymer according to Claim 8 comprising:
from 99.5 to 80 weight percent of a monomer mixture comprising:
100 to 80 weight percent of vinyl or vinylidene chloride; and
up to 20 weight percent of one or more monomers selected from : methyl acrylate, methyl methacrylate, ethyl acrylate, ethyl methacrylate and butyl acrylate;
from 0.5 to 5 weight percent of one or more monomers selected from :
alpha-acryloyloxy acetic acid; beta acrtyloyloxy propionic acid, beta methacryloyloxy propionic acid;
alpha-methacryloyloxy acetic acid; gamma-acryloyloxy butanoic acid; and gamma-methacryloyloxy butanoic acid; and
up to 5 weight percent of one or more monomers selected from: acrolein, acrylamide, N-methylol acrylamide and N-methylol methacrylamide.

## Patentansprüche

1. Verfahren zur Emulsions-Polymerisation einer Monomeren-Mischung, ausgewählt aus
(A) Monomeren-Mischungen, umfassend
(i) 20 bis 80 Gew.-% einer Mischung, die 100 bis 75 Gew.-% eines oder mehrere von vinylaromatischen C₈₋₁₂-Monomeren, die unsubstituiert oder durch einen C₁₋₄-Alkyl-Rest oder ein Chlor-Atom substituiert sind, und 0 bis 25 Gew.-% eines oder mehrerer C₂₋₈-Alkenylnitrile umfaßt;
(ii) 79,5 bis 19,5 Gew.-% eines oder mehrerer konjugierter C₄₋₆-Diolefine, die unsubstituiert oder durch ein Chlor-Atom substituiert sind;
(iii) 0,5 bis 10 Gew.-% eines oder mehrere Monomerer der Formel 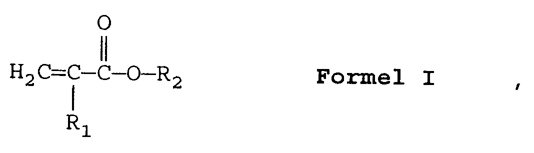 in der
R₁ Wasserstoff oder ein C₁₋₆-Alkyl-Rest ist und
R₂ ein Rest der Formel
(a) 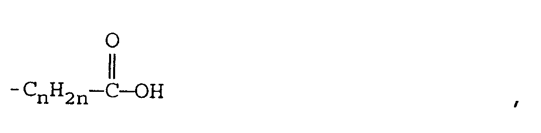 in der
n eine ganze Zahl von 1 bis 6 ist, oder
(b) 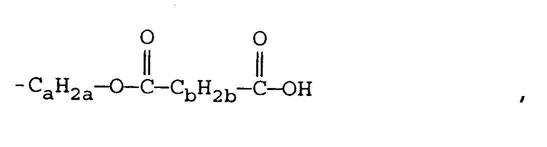 in der
a und b ganze Zahlen von 1 bis 4 sind, ist; und
(iv) gegebenenfalls bis zu 20 Gew.-% eines oder mehrerer Monomerer, ausgewählt aus
(a) C₁₋₈-Alkyl- und -Hydroxyalkyl-Estern von ethylenisch ungesättigten C₃₋₆-Carbonsäuren;
(b) ethylenisch ungesättigten C₃₋₆-Aldehyden; und
(c) Amiden von ethylenisch ungesättigten C₃₋₆-Carbonsäuren, wobei die Amide unsubstituiert oder am Stickstoff-Atom durch bis zu 2 Reste substituiert sind, die aus C₁₋₄-Alkyl- und C₁₋₄-Hydroxyalkyl-Resten ausgewählt sind;
(B) Monomeren-Mischungen, umfassend
(i) wenigstens 75 Gew.-% einer Monomeren-Mischung, umfassend 100 bis 80 Gew.-% eines oder mehrerer Monomerer, ausgewählt aus C₁₋₈-Alkyl- oder -Hydroxyalkylestern von ethylenisch ungesättigten C₃₋₆-Carbonsäuren, und Monomerer, ausgewählt aus vinylaromatischen C₈₋₁₂-Monomeren, die unsubstituiert oder durch einen C₁₋₄-Alkyl-Rest oder ein Chlor-Atom substituiert sind, und C₂₋₈-Alkenylnitrile;
(ii) 0,5 bis 25 Gew.-% eines Monomers der oben definierten Formel I;
(iii) gegebenenfalls bis zu 20 Gew.-% eines oder mehrerer Monomerer, ausgewählt aus
(a) ethylenisch ungesättigten C₃₋₆-Aldehyden; und
(b) Amiden von ethylenisch ungesättigten C₃₋₆-Carbonsäuren, wobei die Amide unsubstituiert oder am Stickstoff-Atom durch bis zu 2 Reste substituiert sind, die aus C₁₋₄-Alkyl- und C₁₋₄-Hydroxyalkyl-Resten ausgewählt sind;
(C) Monomeren-Mischungen, umfassend
(i) 5 bis 39,5 Gew.-% eines oder mehrerer C₂₋₃-Olefine;
(ii) 94,5 bis 60 Gew.-% einer Monomeren-Mischung, umfassend 100 bis 80 Gew.-% eines oder mehrerer Monomerer, ausgewählt aus C₁₋₈-Alkyl- oder -Hydroxyalkylestern von ethylenisch ungesättigten C₃₋₆-Carbonsäuren, und bis zu 20 Gew.-% eines vinylaromatischen C₈₋₁₂-Monomers, das unsubstituiert oder durch einen C₁₋₄-Alkyl-Rest oder ein Chlor-Atom substituiert ist;
(iii) 0,5 bis 10 Gew.-% eines Monomers der oben definierten Formel I; und
(iv) gegebenenfalls bis zu 20 Gew.-% eines oder mehrerer Monomerer, ausgewählt aus
(a) ethylenisch ungesättigten C₃₋₆-Aldehyden; und
(b) Amiden von ethylenisch ungesättigten C₃₋₆-Carbonsäuren, wobei die Amide unsubstituiert oder am Stickstoff-Atom durch bis zu 2 Reste substituiert sind, die aus C₁₋₄-Alkyl- und C₁₋₄-Hydroxyalkyl-Resten ausgewählt sind;
(D) Monomeren-Mischungen, umfassend
(i) 5 bis 39,5 Gew.-% einer Mischung, umfassend 100 bis 75 Gew.-% eines oder mehrerer C₂₋₈-Alkenylnitrile und 0 bis 25 Gew.-% eines oder mehrerer vinylaromatischer Monomerer, die unsubstituiert oder durch einen C₁₋₄-Alkyl-Rest oder ein Chlor-Atom substituiert sind,
(ii) 94,5 bis 60 Gew.-% eines oder mehrerer konjugierter C₄₋₆-Diolefine, die unsubstituiert oder durch ein Chlor-Atom substituiert sind;
(iii) 0,5 bis 10 Gew.-% eines Monomers der oben definierten Formel I; und
(iv) gegebenenfalls bis zu 20 Gew.-% eines oder mehrerer Monomerer, ausgewählt aus
(a) C₁₋₈-Alkyl- und -Hydroxyalkyl-Estern von ethylenisch ungesättigten C₃₋₆-Carbonsäuren;
(b) ethylenisch ungesättigten C₃₋₆-Aldehyden; und
(c) Amiden von ethylenisch ungesättigten C₃₋₆-Carbonsäuren, wobei die Amide unsubstituiert oder am Stickstoff-Atom durch bis zu 2 Reste substituiert sind, die aus C₁₋₄-Alkyl- und C₁₋₄-Hydroxyalkyl-Resten ausgewählt sind;
(E) Monomeren-Mischungen, umfassend
(i) 99,5 bis 70 Gew.-% einer Monomeren-Mischung, umfassend
(a) 100 bis 80 Gew.-% eines oder mehrerer halogenierter aliphatischer C₂₋₆-Alkenyl-Monomerer und
(b) bis zu 20 Gew.-% eines oder mehrerer Monomerer, ausgewählt aus C₁₋₈-Alkenyl- und -Hydroxyalkyl-Estern von ethylenisch ungesättigten C₃₋₆-Carbonsäuren;
(ii) 0,5 bis 29,5 Gew.-% eines oder mehrerer Monomerer der oben definierten Formel I; und
(iii) gegebenenfalls bis zu 20 Gew.-% eines oder mehrerer Monomerer, ausgewählt aus
(a) ethylenisch ungesättigten C₃₋₆-Aldehyden; und
(b) Amiden von ethylenisch ungesättigten C₃₋₆-Carbonsäuren, wobei die Amide unsubstituiert oder am Stickstoff-Atom durch bis zu 2 Reste substituiert sind, die aus C₁₋₄-Alkyl- und C₁₋₄-Hydroxyalkyl-Resten ausgewählt sind;
dadurch gekennzeichnet, daß die Polymerisation bei einem pH-Wert, der größer als 7,5 ist, stattfindet.

2. Verfahren nach Anspruch 1, worin der pH-Wert 8 bis 11 ist.

3. Verfahren nach Anspruch 1, dadurch gekennzeichnet, daß die Monomeren-Mischung
40 bis 70 Gew.-% eines oder mehrerer Monomerer, die aus Styrol, α-Methylstyrol und Acrylnitril ausgewählt sind;
29,5 bis 60 Gew.-% eines oder mehrerer Monomerer, die aus Butadien, Isopren und Chloropren ausgewählt sind;
0,5 bis 5 Gew.-% eines oder mehrerer Monomerer, die aus α-Acryloyloxyessigsäure, β-Acryloyloxypropionsäure, β-Methacryloyloxvpropionsäure, α-Methacryloyloxyessigsäure, γ-Acryloyloxybutansäure, γ-Methacryloyloxybutansäure ausgewählt sind; und
bis zu 5 Gew.-% eines oder mehrerer Monomerer, die aus Acrolein, Methylacrylat, Ethylacrylat, Butylacrylat, Methylmethacrylat, Ethylmethacrylat, Butylmethacrylat, Hydroxyethylacrylat, Ethylhexylacrylat, Hydroxyethylmethacrylat, Ethylhexylmethacrylat, Acrylamid, Methacrylamid, N-Methylolacrylamid und N-Methylolmethacrylamid ausgewählt sind,
umfaßt.

4. Verfahren nach Anspruch 2, worin die Monomeren-Mischung wenigstens 85 Gew.-% einer Mischung, bestehend aus
100 bis 80 Gew.-% eines oder mehrerer Monomerer, die aus Methylacrylat, Ethylacrylat, Hydroxyethylmethacrylat, Butylmethacrylat, Hydroxybutylmethacrylat und Ethylhexylmethacrylat ausgewählt ist, und
bis zu 20 Gew.-% eines oder mehrerer Monomerer, die aus Styrol, α-Methylstyrol und Acrylnitril ausgewählt sind,
0,5 bis 5 Gew.-% eines oder mehrerer Monomerer, die aus α-Acryloyloxyessigsäure, β-Acryloyloxypropionsäure, β-Methacryloyloxypropionsäure, α-Methacryloyloxyessigsäure, γ-Acryloyloxybutansäure, γ-Methacryloyloxybutansäure ausgewählt sind; und
bis zu 5 Gew.-% eines oder mehrerer Monomerer, die aus Acrolein, Acrylamid, Methacrylamid, N-Methylolacrylamid und N-Methylolmethacrylamid ausgewählt sind, umfaßt.

5. Verfahren nach Anspruch 2, worin die Monomeren-Mischung 5 bis 40 Gew.-% Ethylen oder Propylen,
94,5 bis 59,5 Gew.-% einer Mischung, bestehend aus
100 bis 80 Gew.-% eines oder mehrerer Monomerer, die aus Methylacrylat, Ethylacrylat, Hydroxyethylacrylat, Butylacrylat, Hydroxybutylacrylat, Ethylhexylacrylat, Methylmethacrylat, Ethylmethacrylat, Hydroxyethylmethacrylat, Butylmethacrylat, Hydroxybutylmethacrylat ausgewählt ist, und
bis zu 20 Gew.-% eines oder mehrerer Monomerer, die aus Styrol, α-Methylstyrol und Acrylnitril ausgewählt sind,
0,5 bis 5 Gew.-% eines oder mehrerer Monomerer, die aus α-Acryloyloxyessigsäure, β-Acryloyloxypropionsäure, β-Methacryloyloxypropionsäure, α-Methacryloyloxyessigsäure, γ-Acryloyloxybutansäure, γ-Methacryloyloxybutansäure ausgewählt sind; und
bis zu 5 Gew.-% eines oder mehrerer Monomerer, die aus Acrolein, Acrylamid, Methacrylamid, N-Methylolacrylamid und N-Methylolmethacrylamid ausgewählt sind,
umfaßt.

6. Verfahren nach Anspruch 2, worin die Monomeren-Mischung 20 bis 40 Gew.-% eines oder mehrerer Monomerer, die aus Acrylnitril und Methacrylnitril ausgewählt sind,
79,5 bis 59,5 Gew.-% eines oder mehrerer Monomerer, die aus Butadien, Isopren und Chloropren ausgewählt sind,
0,5 bis 5 Gew.-% eines oder mehrerer Monomerer, die aus α-Acryloyloxyessigsäure, β-Acryloyloxypropionsäure, β-Methacryloyloxypropionsäure, α-Methacryloyloxyessigsäure, γ-Acryloyloxybutansäure, γ-Methacryloyloxybutansäure ausgewählt sind; und
bis zu 5 Gew.-% eines oder mehrerer Monomerer, die aus Acrolein, Methylacrylat, Ethylacrylat, Butylacrylat, Methylmethacrylat, Ethylmethacrylat, Butylmethacrylat, Hydroxyethylacrylat, Ethylhexylacrylat, Hydroxyethylmethacrylat, Ethylhexylmethacrylat, Acrylamid, Methacrylamid, N-Methylolacrylamid und N-Methylolmethacrylamid ausgewählt sind,
umfaßt.

7. Verfahren nach Anspruch 2, worin die Monomeren-Mischung umfaßt:
(i) 99,5 bis 80 Gew.-% einer Monomeren-Mischung, umfassend
100 bis 80 Gew.-% Vinyl- oder Vinylidenchlorid; und bis zu 20 Gew.-% eines oder mehrerer Monomerer, die aus Methylacrylat, Methylmethacrylat, Ethylacrylat, Ethylmethacrylat und Butylacrylat ausgewählt sind;
(ii) 0,5 bis 19,5 Gew.-% eines oder mehrerer Monomerer, die aus α-Acryloyloxyessigsäure, β-Acryloyloxypropionsäure, β-Methacryloyloxypropionsäure, α-Methacryloyloxyessigsäure, γ-Acryloyloxybutansäure und γ-Methacryloyloxybutansäure ausgewählt sind; und
(iii) bis zu 5 Gew.-% eines oder mehrerer Monomerer, die aus Acrolein, Acrylamid, N-Methylolacrylamid und N-Methylolmethacrylamid ausgewählt sind.

8. Polymer, erhalten nach Anspruch 1, ausgewählt aus
(A) Polymeren, die hergestellt sind durch Polymerisieren einer Monomeren-Mischung, umfassend
(i) 5 bis 40 Gew.-% eines oder mehrerer C₂₋₃-Olefine;
(ii) 94,5 bis 59,5 Gew.-% einer Monomeren-Mischung, umfassend 100 bis 80 Gew.-% eines oder mehrerer Monomerer, ausgewählt aus C₁₋₈-Alkyl- oder -Hydroxyalkylestern von ethylenisch ungesättigten C₃₋₆-Carbonsäuren, und bis zu 20 Gew.-% eines vinylaromatischen C₈₋₁₂-Monomers, das unsubstituiert oder durch einen C₁₋₄-Alkyl-Rest oder ein Chlor-Atom substituiert ist;
(iii) 0,5 bis 10 Gew.-% eines Monomers der in Anspruch 1 definierten Formel I; und
(iv) gegebenenfalls bis zu 20 Gew.-% eines oder mehrerer Monomerer, ausgewählt aus
(a) ethylenisch ungesättigten C₃₋₆-Aldehyden; und
(b) Amiden von ethylenisch ungesättigten C₃₋₆-Carbonsäuren, wobei die Amide unsubstituiert oder am Stickstoff-Atom durch bis zu 2 Reste substituiert sind, die aus C₁₋₄-Alkyl- und C₁₋₄-Hydroxyalkyl-Resten ausgewählt sind;
(B) Polymeren, die hergestellt sind durch Polymerisieren einer Monomeren-Mischung, umfassend
(i) 5 bis 40 Gew.-% eines oder mehrerer C₂₋₈-Alkenylnitrile;
(ii) 94,5 bis 59,5 Gew.-% eines oder mehrerer konjugierter C₄₋₆-Diolefine;
(iii) 0,5 bis 10 Gew.-% eines Monomers der in Anspruch 1 definierten Formel I; und
(iv) gegebenenfalls bis zu 20 Gew.-% eines oder mehrerer Monomerer, ausgewählt aus
(a) C₁₋₈-Alkyl- und -Hydroxyalkyl-Estern von ethylenisch ungesättigten C₃₋₆-Carbonsäuren;
(b) ethylenisch ungesättigten C₃₋₆-Aldehyden; und
(c) Amiden von ethylenisch ungesättigten C₃₋₆-Carbonsäuren, wobei die Amide unsubstituiert oder am Stickstoff-Atom durch bis zu 2 Reste substituiert sind, die aus C₁₋₄-Alkyl- und C₁₋₄-Hydroxyalkyl-Resten ausgewählt sind;
(C) Polymeren, die hergestellt sind durch Polymerisiereln einer Monomeren-Mischung, umfassend
(i) 99,5 bis 70 Gew.-% einer Monomeren-Mischung, umfassend
(a) 100 bis 80 Gew.-% eines oder mehrerer halogenierter aliphatischer C₂₋₆-Alkenyl-Monomerer und
(b) bis zu 20 Gew.-% eines oder mehrerer Monomerer, ausgewählt aus C₁₋₈-Alkenyl- und -Hydroxyalkyl-Estern von ethylenisch ungesättigten C₃₋₆-Carbonsäuren;
(ii) 0,5 bis 29,5 Gew.-% eines oder mehrerer Monomerer der in Anspruch 1 definierten Formel I; und
(iii) gegebenenfalls bis zu 20 Gew.-% eines oder mehrerer Monomerer, ausgewählt aus
(a) ethylenisch ungesättigten C₃₋₆-Aldehyden; und
(b) Amiden von ethylenisch ungesättigten C₃₋₆-Carbonsäuren, wobei die Amide unsubstituiert oder am Stickstoff-Atom durch bis zu 2 Reste substituiert sind, die aus C₁₋₄-Alkyl- und C₁₋₄-Hydroxyalkyl-Resten ausgewählt sind.

9. Polymer nach Anspruch 8, umfassend
5 bis 40 Gew.-% Ethylen oder Propylen,
94,5 bis 59,5 Gew.-% einer Mischung, bestehend aus
100 bis 80 Gew.-% eines oder mehrerer Monomerer, die aus Methylacrylat, Ethylacrylat, Hydroxyethylacrylat, Butylacrylat, Hydroxybutylacrylat, Ethylhexylacrylat, Methylmethacrylat, Ethylmethacrylat, Hydroxyethylmethacrylat, Butylmethacrylat, Hydroxybutyimethacrylat ausgewählt ist, und
bis zu 20 Gew.-% eines oder mehrerer Monomerer, die aus Styrol und α-Methylstyrol ausgewählt sind,
0,5 bis 5 Gew.-% α-Acryloyloxyessigsäure, β-Acryloyloxypropionsäure, β-Methacryloyloxvpropionsäure, α-Methacryloyloxyessigsäure, γ-Acryloyloxybutansäure, γ-Methacryloyloxybutansäure; und
bis zu 5 Gew.-% eines oder mehrerer Monomerer, die aus Acrolein, Acrylamid, Methacrylamid, N-Methylolacrylamid und N-Methylolmethacrylamid ausgewählt sind.

10. Polymer nach Anspruch 8, umfassend
20 bis 40 Gew.-% eines oder mehrerer Monomerer, die aus Acrylnitril und Methacrylnitril ausgewählt sind,
79,5 bis 59,5 Gew.-% eines oder mehrerer Monomerer, die aus Butadien, Isopren und Chloropren ausgewählt sind,
0,5 bis 5 Gew.-% α-Acryloyloxyessigsäure, β-Acryloyloxypropionsäure, β-Methacryloyloxypropionsäure, α-Methacryloyloxyessigsäure, γ-Acryloyloxybutansäure, γ-Methacryloyloxybutansäure; und
bis zu 5 Gew.-% eines oder mehrerer Monomerer, die aus Acrolein, Methylacrylat, Ethylacrylat, Butylacrylat, Methylmethacrylat, Ethylmethacrylat, Butylmethacrylat, Hydroxyethylacrylat, Ethylhexylacrylat, Hydroxyethylmethacrylat, Ethylhexylmethacrylat, Acrylamid, Methacrylamid, N-Methylolacrylamid und N-Methylolmethacrylamid ausgewählt sind.

11. Polymer nach Anspruch 8, umfassend
99,5 bis 80 Gew.-% einer Monomeren-Mischung, umfassend
100 bis 80 Gew.-% Vinyl- oder Vinylidenchlorid; und bis zu 20 Gew.-% eines oder mehrerer Monomerer, die aus Methylacrylat, Methylacrylat, Ethylacrylat, Ethylmethacrylat und Butylacrylat ausgewählt sind;
0,5 bis 5 Gew.-% eines oder mehrerer Monomerer, die aus α-Acryloyloxyessigsäure, β-Acryloyloxypropionsäure, β-Methacryloyloxypropionsäure, α-Methacryloyloxyessigsäure, γ-Acryloyloxybutansäure und γ-Methacryloyloxybutansäure ausgewählt sind; und
bis zu 5 Gew.-% eines oder mehrerer Monomerer, die aus Acrolein, Acrylamid, N-Methylolacrylamid und N-Methylolmethacrylamid ausgewählt sind.

## Revendications

1. Procédé de polymérisation en émulsion d'un mélange de monomères choisi entre :
(A) des mélanges de monomères comprenant :
(i) 20 à 80 % en poids d'un mélange comprenant 100 à 75 % en poids d'un ou plusieurs monomères aromatiques vinyliques en C₈ à C₁₂ qui sont non substitués ou substitués par un radical alkyle en C₁ à C₄ ou un atome de chlore, et 0 à 25 % en poids d'un ou plusieurs alcénylnitriles en C₂ à C₈ ;
(ii) 79,5 à 19,5 % en poids d'une ou plusieurs dioléfines conjuguées en C₄ à C₆ qui sont non substituées ou substituées par un atome de chlore ;
(iii) 0,5 à 10 % en poids d'un ou plusieurs monomères de formule : 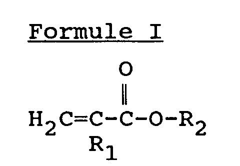 dans laquelle R₁ est l'hydrogène ou un radical alkyle en C₁ à C₆ et R₂ est un radical de formule
(a) 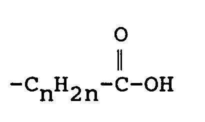 dans laquelle n est un nombre entier de 1 à 6 ; ou bien
(b) 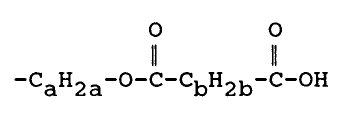 dans laquelle a et b sont des nombres entiers de 1 à 4 ; et
(iv) à titre facultatif, jusqu'à 20 % en poids d'un ou plusieurs monomères choisis entre :
(a) des esters d'alkyle et d'hydroxyalkyle en C₁ à C₈ d'acides carboxyliques à non-saturation éthylénique en C₃ à C₆ ;
(b) d'aldéhydes à non-saturation éthylénique en C₃ à C₆ ; et
(c) d'amides d'acides carboxyliques à non-saturation éthylénique en C₃ à C₆, ces amides étant non substitués ou substitués au niveau de l'atome d'azote par jusqu'à deux radicaux choisis entre des radicaux alkyle en C₁ à C₄ et des radicaux hydroxyalkyle en C₁ à C₄ ;
(B) des mélanges de monomères comprenant :
(i) au moins 75 % en poids d'un mélange de monomères comprenant 100 à 80 % en poids d'un ou plusieurs monomères choisis entre :
les esters d'alkyle ou d'hydroxyalkyle en C₁ à C₈ d'acides carboxyliques à non-saturation éthylénique en C₃ à C₆ et de monomères choisis entre :
des monomères aromatiques vinyliques en C₈ à C₁₂ qui sont non substitués ou substitués par un radical alkyle en C₁ à C₄ ou par un atome de chlore, et des alcénylnitriles en C₂ à C₈,
(ii) 0,5 à 25 % en poids d'un monomère de formule I telle que définie ci-dessus ;
(iii) à titre facultatif, jusqu'à 20 % en poids d'un ou plusieurs monomères choisis entre :
(a) des aldéhydes à non-saturation éthylénique en C₃ à C₆ et
(b) des amides d'acides carboxyliques à non-saturation éthylénique en C₃ à C₆, ces amides étant non substitués ou substitués au niveau de l'atome d'azote par jusqu'à deux radicaux choisis entre des radicaux alkyle en C₁ à C₄ et hydroxyalkyle en C₁ à C₄ ;
(C) des mélanges de monomères comprenant :
(i) 5 à 39,5 % en poids d'une ou plusieurs oléfines en C₂ ou C₃ ;
(ii) 94,5 % à 60 % en poids d'un mélange de monomères comprenant :
100 à 80 % en poids d'un ou plusieurs monomères choisis entre des esters d'alkyle ou d'hydroxyalkyle en C₁ à C₈ d'un acide carboxylique à non-saturation éthylénique en C₃ à C₆ ; et
jusqu'à 20 % en poids d'un monomère aromatique vinylique en C₈ à C₁₂ qui est non substitué ou substitué par un radical alkyle en C₁ à C₄ ou un atome de chlore ;
(iii) 0,5 à 10 % en poids d'un monomère de formule I telle que définie ci-dessus ; et
(iv) à titre facultatif, jusqu'à 20 % en poids d'un ou plusieurs monomères choisis entre :
(a) des aldéhydes à non-saturation éthylénique en C₃ à C₆, et
(b) des amides d'acides carboxyliques à non-saturation éthylénique en C₃ à C₆, ces amides étant non substitués ou substitués au niveau de l'atome d'azote par jusqu'à deux radicaux choisis entre des radicaux alkyle en C₁ à C₄ et hydroxyalkyle en C₁ à C₄ ;
(D) des mélanges de monomères comprenant :
(i) 5 à 39,5 % en poids d'un mélange comprenant 100 à 75 % en poids d'un ou plusieurs alcénylnitriles en C₂ à C₆ et 0 à 25 % en poids d'un ou plusieurs monomères aromatiques vinyliques qui sont non substitués ou substitués par un radical alkyle en C₁ à C₄ ou un atome de chlore :
(ii) 94,5 à 60 % en poids d'une ou plusieurs dioléfines conjuguées en C₄ à C₆ qui sont non substituées ou substituées par un atome de chlore ;
(iii) 0,5 à 10 % en poids d'un monomère de formule I telle que définie ci-dessus : et
(iv) à titre facultatif, jusqu'à 20 % en poids d'un ou plusieurs monomères choisis entre :
(a) des esters d'alkyle et d'hydroxyalkyle en C₁ à C₈ d'acides carboxyliques à non-saturation éthylénique en C₃ à C₆ ;
(b) des aldéhydes à non-saturation éthylénique en C₃ à C₆ ; et
(c) des amides d'acides carboxyliques à non-saturation éthylénique en C₃ à C₆, ces amides étant non substitués ou substitués au niveau de l'atome d'azote par jusqu'à deux radicaux choisis entre des radicaux alkyle en C₁ à C₄ et hydroxyalkyle en C₁ à C₄,
(E) des mélanges de monomères comprenant :
(i) 99,5 à 70 % en poids d'un mélange de monomères comprenant :
(a) 100 à 80 % en poids d'un ou plusieurs monomères alcényliques aliphatiques en C₂ à C₆ halogénés et
(b) jusqu'à 20 % en poids d'un ou plusieurs monomères choisis entre des esters d'alcényle et d'hydroxyalkyle en C₁ à C₈ d'acides carboxyliques à non-saturation éthylénique en C₃ à C₆,
(ii) 0,5 à 29,5 % en poids d'un ou plusieurs monomères de formule I telle que définie ci-dessus ; et
(iii) à titre facultatif, jusqu'à 20 % en poids d'un ou plusieurs monomères choisis entre :
(a) des aldéhydes à non-saturation éthylénique en C₃ à C₆ et
(b) des amides d'acides carboxyliques à non-saturation éthylénique en C₃ à C₆, ces amides étant non substitués ou substitués au niveau de l'atome d'azote par jusqu'à deux radicaux choisis entre :
des radicaux alkyle en C₁ à C₄ et hydroxyalkyle en C₁ à C₄ ;
caractérisé en ce que la polymérisation a lieu à un pH supérieur à 7,5.

2. Procédé suivant la revendication 1, dans lequel le pH a une valeur de 8 à 11.

3. Procédé suivant la revendication 1, caractérisé en ce que le mélange de monomères comprend :
40 à 70 % en poids d'un ou plusieurs monomères choisis entre : le styrène, l'alpha-méthylstyrène et l'acrylonitrile ;
29,5 à 60 % en poids d'un ou plusieurs monomères choisis entre le butadiène, l'isoprène et le chloroprène ;
0,5 à 5 % en poids d'un ou plusieurs monomères choisis entre l'acide alpha-acryloyloxy-acétique ; l'acide bêta-acryloyloxy-propionique ; l'acide bêta-méthacryloyloxypropionique ; l'acide alpha-méthylacryloyloxy-acétique ; l'acide gamma-acryloyloxy-butanoïque ; l'acide gamma-méthacryloyloxy-butanoïque ; et
jusqu'à 5 % en poids d'un ou plusieurs monomères choisis entre : l'acroléine, l'acrylate de méthyle, l'acrylate d'éthyle, l'acrylate de butyle, le méthacrylate de méthyle, le méthacrylate d'éthyle, le méthacrylate de butyle, l'acrylate d'hydroxyéthyle, l'acrylate d'éthylhexyle, le méthacrylate d'hydroxyéthyle, le méthacrylate d'éthylhexyle, l'acrylamide, le méthacrylamide, le N-méthylol-acrylamide et le N-méthylol-méthacrylamide.

4. Procédé suivant la revendication 2, dans lequel le mélange de monomères comprend au moins 85 % en poids d'un mélange constitué de 100 à 80 % en poids d'un ou plusieurs monomères choisis entre l'acrylate de méthyle, l'acrylate d'éthyle, le méthacrylate d'hydroxyéthyle, le méthacrylate de butyle, le méthacrylate d'hydroxybutyle et le méthacrylate d'éthylhexyle et jusqu'à 20 % en poids d'un ou plusieurs monomères choisis entre le styrène, l'alpha-méthylstyrène et l'acrylonitrile ;
0,5 à 5 % en poids d'un ou plusieurs monomères choisis entre l'acide alpha-acryloyloxy-acétique ; l'acide bêta-acryloyloxy-propionique ; l'acide bêta-méthacryloyloxypropionique ; l'acide alpha-méthacryloyloxy-acétique ; l'acide gamma-acryloyloxy-butanoïque ; l'acide gamma-méthacryloyloxy-butanoïque ; et
jusqu'à 5 % en poids d'un ou plusieurs monomères choisis entre l'acroléine, l'acrylamide, la méthacrylamide, le N-méthylol-acrylamide et le N-méthylol-méthacrylamide.

5. Procédé suivant la revendication 2, dans lequel le mélange de monomères comprend :
5 à 40 % en poids d'éthylène ou de propylène ;
94,5 à 59,5 % en poids d'un mélange constitué de 100 à 80 % en poids d'un ou plusieurs monomères choisis entre l'acrylate de méthyle, l'acrylate d'éthyle, l'acrylate d'hydroxyéthyle, l'acrylate de butyle, l'acrylate d'hydroxybutyle, l'acrylate-d'éthylhexyle, le-méthacrylate de méthyle, le méthacrylate d'éthyle, le méthacrylate d'hydroxyéthyle ; le méthacrylate de butyle, le méthacrylate d'hydroxybutyle ; et jusqu'à 20 % en poids d'un ou plusieurs monomères choisis entre le styrène, l'alpha-méthylstyrène et l'acrylonitrile ;
0,5 à 5 % en poids d'un ou plusieurs monomères choisis entre l'acide alpha-acryloyloxy-acétique ; l'acide bêta-acryloyloxy-propionique ; l'acide bêta-méthacryloyloxypropionique : l'acide alpha-méthacryloyloxy-acétique ; l'acide gamma-acryloyloxy-butanoïque ; l'acide gamma-méthacryloyloxy-butanoïque ; et
jusqu'à 5 % en poids d'un ou plusieurs monomères choisis entre l'acroléine, l'acrylamide, le méthacrylamide, le N-méthylol-acrylamide et le N-méthylol-méthacrylamide.

6. Procédé suivant la revendication 2, dans lequel le mélange de monomères comprend :
20 à 40 % en poids d'un ou plusieurs monomères choisis entre l'acrylonitrile et le méthacrylonitrile ;
79,5 à 59,5 % en poids d'un ou plusieurs monomères choisis entre le butadiène, l'isoprène et le chloroprène ;
0,5 à 5 % en poids d'un ou plusieurs monomères choisis entre l'acide alpha-acryloyloxy-acétique ; l'acide bêta-acryloyloxy-propionique ; l'acide bêta-méthacryloyloxypropionique ; l'acide alpha-méthacryloxy-acétique ; l'acide gamma-acryloyloxy-butanoïque ; l'acide gamma-méthacryloyloxybutanoïque ; et
jusqu'à 5 % en poids d'un ou plusieurs monomères choisis entre l'acroléine, l'acrylate de méthyle, l'acrylate d'éthyle, l'acrylate de butyle, le méthacrylate de méthyle, le méthacrylate d'éthyle, le méthacrylate de butyle, l'acrylate d'hydroxyéthyle, l'acrylate d'éthylhexyle, le méthacrylate d'hyroxyéthyle, le méthacrylate d'éthylhexyle, l'acrylamide, le méthacrylamide, le N-méthylol-acrylamide et le N-méthylol-méthacrylamide.

7. Procédé suivant la revendication 2, dans lequel le mélange de monomères comprend :
(i) 99,5 à 80 % en poids d'un mélange de monomères comprenant :
100 à 80 % en poids de chlorure de vinyle ou de vinylidène ; et
jusqu'à 20 % en poids d'un ou plusieurs monomères choisis entre l'acrylate de méthyle, le méthacrylate de méthyle, l'acrylate d'éthyle, le méthacrylate d'éthyle et l'acrylate de butyle,
(ii) 0,5 à 19,5 % en poids d'un ou plusieurs monomères choisis entre ;
l'acide alpha-acryloyloxy-acétique ; l'acide bêta-acryloyloxy-propionique, l'acide bêta-méthacryloyloxy-propionique ; l'acide alpha-méthacryloyloxy-acétique ; l'acide gamma-acryloyloxy-butanoïque ; l'acide gamma-méthacryloyloxy-butanoïque ; et
(iii) jusqu'à 5 % en poids d'un ou plusieurs monomères choisis entre l'acroléine, l'acrylamide, le N-méthylol-acrylamide et le N-méthylol-méthacrylamide.

8. Polymère obtenu suivant la revendication 1, choisi entre :
(A) des polymères préparés par polymérisation d'un mélange de monomères comprenant :
(i) 5 à 40 % en poids d'une ou plusieurs oléfines en C₂ ou C₃ ;
(ii) 94,5 à 59,5 % en poids d'un mélange de monomères comprenant :
100 à 80 % en poids d'un ou plusieurs monomères choisis entre des esters d'alkyle ou d'hydroxyalkyle en C₁ à C₈ d'un acide carboxylique à non-saturation éthylénique en C₃ à C₆ ; et jusqu'à 20 % en poids d'un monomère aromatique vinylique en C₈ à C₁₂ qui est non substitué ou substitué par un radical alkyle en C₁ à C₄ ou par un atome de chlore ;
(iii) 0,5 à 10 % en poids d'un monomère de formule I telle que définie dans la revendication 1 ; et
(iv) à titre facultatif, jusqu'à 20 % en poids d'un ou plusieurs monomères choisis entre :
(a) des aldéhydes à non-saturation éthylénique en C₃ à C₆ et
(b) des amides d'acides carboxyliques à non-saturation éthylénique en C₃ à C₆, ces amides étant non substitués ou substitués au niveau de l'atome d'azote par jusqu'à deux radicaux choisis entre des radicaux alkyle en C₁ à C₄ et hydroxyalkyle en C₁ à C₄ ;
(B) des polymères préparés par polymérisation d'un mélange de monomères comprenant :
(i) 5 à 40 % en poids d'un ou plusieurs alcénylnitriles en C₂ à C₈ ;
(ii) 94,5 à 59,5 % en poids d'une ou plusieurs dioléfines conjuguées en C₄ à C₆ ;
(iii) 0,5 à 10 % en poids d'un monomère de formule I telle que définie dans la revendication 1 ; et
(iv) à titre facultatif, jusqu'à 20 % en poids d'un ou plusieurs monomères choisis entre :
(a) des esters d'alkyle en C₁ à C₈ d'acides carboxyliques à non-saturation éthylénique en C₃ à C₆ ;
(b) des aldéhydes à non-saturation éthylénique en C₃ à C₆ ; et
(c) des amides d'acides carboxyliques à non-saturation éthylénique en C₃ à C₆, ces amides étant non substitués ou substitués au niveau de l'atome d'azote par jusqu'à deux radicaux choisis entre des radicaux alkyle en C₁ à C₄ et des radicaux hydroxyalkyle en C₁ à C₄ ;
(C) des polymères préparés par polymérisation d'un mélange de monomères comprenant :
(i) 99,5 à 70 % en poids d'un mélange de monomères comprenant :
(a) 100 à 80 % en poids d'un ou plusieurs monomères alcényliques aliphatiques en C₂ à C₆ halogénés et
(b) jusqu'à 20 % en poids d'un ou plusieurs monomères choisis entre des esters d'alcényle et d'hydroxyalkyle en C₁ à C₈ d'acides carboxyliques à non-saturation éthylénique en C₃ à C₆ ;
(ii) 0,5 à 29,5 % en poids d'un ou plusieurs monomères de formule I telle que définie dans la revendication 1 : et
(iii) à titre facultatif jusqu'à 20 % en poids d'un ou plusieurs monomères choisis entre :
(a) des aldéhydes à non-saturation éthylénique en C₃ à C₆ : et
(b) des amides d'acides carboxyliques à non-saturation éthylénique en C₃ à C₆, ces amides étant non substitués ou substitués au niveau de l'atome d'azote par jusqu'à deux radicaux choisis entre des radicaux alkyle en C₁ à C₄ et hydroxyalkyle en C₁ à C₄.

9. Polymère suivant la revendication 8, comprenant :
5 à 40 % en poids d'éthylène ou de propylène ;
94,5 à 59,5 % en poids d'un mélange constitué de 100 à 80 % en poids d'un ou plusieurs monomères choisis entre l'acrylate de méthyle, l'acrylate d'éthyle, l'acrylate d'hydroxyéthyle, l'acrylate de butyle, l'acrylate d'hydroxybutyle, l'acrylate d'éthyhexyle, le méthacrylate de méthyle, le méthacrylate d'éthyle, le méthacrylate d'hydroxyéthyle, le méthacrylate de butyle, le méthacrylate d'hydroxybutyle ; et jusqu'à 20 % en poids d'un ou plusieurs monomères choisis entre le styrène et l'alpha-méthylstyrène ;
0,5 à 5 % en poids d'acide alpha-acryloyloxy-acétique ; d'acide bêta-acryloyloxy-propionique ; d'acide bêta-méthacryloyloxy-propionique ; d'acide alpha-méthacryloyloxy-acétique ; d'acide gamma-acryloyloxy-butanoïque ; d'acide gamma-méthacryloyloxy-butanoïque ;et
jusqu'à 5 % en poids d'un ou plusieurs monomères choisis entre l'acroléine, l'acrylamide, le méthacrylamide, le N-méthylol-acrylamide et le N-méthylol-méthacrylamide.

10. Polymère suivant la revendication 8, comprenant :
20 à 40 % en poids d'un ou plusieurs monomères choisis entre l'acrylonitrile et le méthacrylonitrile ;
79,5 à 59,5 % en poids d'un ou plusieurs monomères choisis entre le butadiène, l'isoprène et le chloroprène ;
0,5 à 5 % en poids d'acide alpha-acryloyloxy-acétique ; d'acide bêta-acryloyloxy-propionique ; d'acide bêta-méthacryloyloxy-propionique ; d'acide alpha-méthacryloyloxy-acétique ; d'acide gamma-acryloyloxy-butanoïque ; d'acide gamma-méthacryloyloxy-butanoïque et jusqu'à 5 % en poids d'un ou plusieurs monomères choisis entre l'acroléine, l'acrylate de méthyle, l'acrylate d'éthyle, l'acrylate de butyle, le méthacrylate de méthyle, le méthacrylate d'éthyle, le méthacrylate de butyle, l'acrylate d'hydroxyéthyle, l'acrylate d'éthylhexyle, le méthacrylate d'hydroxyéthyle, le méthacrylate d'éthylhexyle, l'acrylamide, le méthacrylamide, le N-méthylol-acrylamide et le N-méthylol-méthacrylamide.

11. Polymère suivant la revendication 8, comprenant :
99,5 à 80 % en poids d'un mélange de monomères qui comprend :
100 à 80 % en poids de chlorure de vinyle ou de vinylidène ; et
jusqu'à 20 % en poids d'un ou plusieurs monomères choisis entre l'acrylate de méthyle, le méthacrylate de méthyle, l'acrylate d'éthyle, le méthacrylate d'éthyle et l'acrylate de butyle ;
0,5 à 5 % en poids d'un ou plusieurs monomères choisis entre l'acide alpha-acryloyloxy-acétique ; l'acide bêta-acryloyloxy-propionique ; l'acide bêta-méthacryloyloxy-propionique ; l'acide alpha-méthacryloyloxy-acétique ; l'acide gamma-acryloyloxy-butanoïque et l'acide gamma-méthacryloyloxy-butanoïque, et
jusqu'à 5 % en poids d'un ou plusieurs monomères choisis entre l'acroléine, l'acrylamide, le N-méthylol-acrylamide et le N-méthylol-méthacrylamide.
